# EUROPÄISCHE PATENTSCHRIFT

(11) **EP 0 723 529 B1**
(45) Veröffentlichungstag und Bekanntmachung des Hinweises auf die Patenterteilung: **08.04.1998**
(21) Anmeldenummer: 94929525.7
(22) Anmeldetag: 10.10.1994
(51) Int. Cl.: C04B 35/58, C04B 35/632, C04B 41/85, C23C 24/00, C03C 17/00

(54) **VERFAHREN ZUR HERSTELLUNG VON TiN-SINTERKÖRPERN UND -SCHICHTEN**
PROCESS FOR PRODUCING TiN SINTERED BODIES AND COATINGS
PROCEDE DE PRODUCTION DE CORPS FRITTES ET DE COUCHES EN NITRURE DE TITANE

(30) Priorität: 11.10.1993 DE 4334639
(43) Veröffentlichungstag der Anmeldung: 31.07.1996
(73) Patentinhaber: INSTITUT FÜR NEUE MATERIALIEN gemeinnützige GmbH, 66123 Saarbrücken (DE)
(72) Erfinder: NASS, Rüdiger, D-66292 Riegelsberg (DE); ASLAN, Mesut, D-66953 Pirmasens (DE); ALBAYRAK, Sener, D-66115 Saarbrücken (DE); SCHMIDT, Helmut, D-66130 Saarbrücken (DE); ARPAC, Ertugrul, 07200 Antalyaya (TR)
(74) Vertreter: Barz, Peter, Dr.
(86) Internationale Anmeldenummer: EP9403335
(87) Internationale Veröffentlichungsnummer: WO9510491

(56) Entgegenhaltungen:
- PATENT ABSTRACTS OF JAPAN vol. 013, no. 331 (C-622) 25. Juli 1989 & JP,A,01 111 774 (NHK SPRING CO LTD) 28. April 1989
- DATABASE WPI Section Ch, Week 9210, Derwent Publications Ltd., London, GB; Class D21, AN 92-076731 & JP,A,4 021 619 (NIPPON FERROFLUID) 24. Januar 1992

## Beschreibung

Die vorliegende Erfindung betrifft ein Verfahren zur Herstellung von gesinterten Körpern oder Schichten aus Titannitrid (TiN) unter Verwendung einer Suspension aus oberflächenmodifizierten nanoskaligen TiN-Teilchen.

Unter "nanoskaligen Teilchen" sollen im folgenden Teilchen verstanden werden, deren durchschnittliche Größe nicht mehr als 100 nm, insbesondere nicht mehr als 50 nm und besonders bevorzugt nicht mehr als 30 nm beträgt.

Bei der Verarbeitung von nanodispersen Materialien (Teilchen, Pulvern) existieren im wesentlichen zwei Probleme, nämlich:
(a) die Kontrolle der Teilchenagglomeration bei der Verarbeitung dieser Materialien und
(b) die Herstellung von verarbeitungsfähigen keramischen Massen mit hohen Feststoffgehalten.

Hinsichtlich des Problems (a) ist festzustellen, daß beim Übergang von sub-mikron zu nanoskaligen keramischen Pulvern allgemein eine Zunahme der Agglomeration beobachtet wird. Dies ist darauf zurückzuführen, daß mit abnehmender Teilchengröße auch schwache Wechselwirkungskräfte, wie z.B. van der Waals-Kräfte, erheblich an Bedeutung gewinnen bzw. dominieren. Hinzu kommt, daß die Partikeloberfläche immer mit funktionellen, d.h. kondensationsfähigen, Gruppen belegt ist. Diese sind bei konventionellen Submikronpulvern nur insoweit von Bedeutung, als sie als Wechselwirkungszentren für erforderliche organische Prozeßhilfsmittel (Dispergierhilfsmittel, Bindemittel, usw.) herangezogen werden können. Aufgrund des großen Oberflächen-zu-Volumen-Verhältnisses bei nanodispersen Materialien kommt den Oberflächengruppen aber auch in einer anderen Hinsicht große Bedeutung zu. Zum einen können sie ebenfalls als Reaktionszentren für organische Prozeßhilfsmittel dienen. Zum anderen können sie aber auch durch Kondensationsreaktionen zwischen einzelnen Partikeln zur Bildung harter Agglomerate führen. Die Partikel sind dann quasi über Sinterhälse miteinander verbunden. Es ist daher wünschenswert, Verfahren zu entwickeln, mit denen die Agglomeration soweit zu beherrschen ist, daß kontrolliert agglomerierte Pulver erhalten werden können. Des weiteren wäre es günstig, wenn mit diesen Verfahren die reaktive Oberfläche nach außen abgeschirmt und so eine interpartikuläre Kondensation verhindert werden könnte.

Zum obigen Problem (b) kann bemerkt werden, daß die Herstellung von keramischen Massen mit hohen Feststoffgehalten und auf ein Formgebungsverfahren abgestimmten Verarbeitungseigenschaften erhebliche Schwierigkeiten bereitet. Zur Vermeidung von Agglomeraten, die in grünen wie auch in gesinterten Körpern zu gravierenden Defekten führen können, wird allgemein in Suspensionen gearbeitet. Zur Suspensionsstabilisierung werden Dispergierhilfsmittel zugesetzt, die die Aufgabe haben, eine Agglomeration zu verhindern und der Suspension die benötigten Verarbeitungseigenschaften zu verleihen. Bei der Suspensionsstabilisierung können zwei prinzipielle Möglichkeiten unterschieden werden, nämlich die elektrostatische und die sterische Stabilisierung.

Die elektrostatische Stabilisierung hat den Nachteil, daß aufgrund des großen hydrodynamischen Radius der suspendierten Partikel nur geringe Feststoffgehalte realisiert werden können. Demgegenüber bietet die sterische Stabilisierung die prinzipielle Möglichkeit, Suspensionen mit hohen Feststoffgehalten aus nanoskaligen Materialien herzustellen, da hier der hydrodynamische Partikelradius viel kleiner ist.

Die Vorteile der sterischen Stabilisierung wurden am Beispiel von nanodispersem SiO₂ bereits gezeigt. Als Dispergierhilfsmittel wurden hier allgemein nicht-ionische organische Polymere (z.B. Polymethylmethacrylat) eingesetzt, die auf der Partikeloberfläche adsorbiert werden. Der Nachteil einer derartigen Stabilisierung ist, daß auch hiermit nur maximale Feststoffgehalte von ca. 20 bis 30 Vol.-% realisierbar sind und eine Übertragbarkeit auf von SiO₂ verschiedene Stoffsysteme nur mit erheblichen Einschränkungen möglich ist. Dies liegt vor allem daran, daß die für ein Material spezifischen oberflächenchemischen Eigenschaften (z.B. saure/basische Eigenschaften) nicht ohne weiteres auf ein anderes Material übertragen werden können.

Es ist daher wünschenswert, ein Verfahren bereitzustellen, mit dem es möglich ist, die Partikeloberfläche durch entsprechende chemische Verbindungen so zu modifizieren, daß ein optimaler Dispergiergrad erreicht und hohe Feststoffgehalte der Dispersion realisiert werden können.

Titannitrid (TiN) gehört zur Gruppe der metallischen Hartstoffe und besitzt eine kubische Kristallstruktur. Aufgrund des hohen kovalenten Bindungsanteils besitzt TiN einen hohen Schmelzpunkt, eine hohe Härte sowie gute Oxidationsbeständigkeit und Korrosionsbeständigkeit. Aus diesen Eigenschaften resultieren die Anwendungen von TiN als Schichtmaterial für den Verschleißschutz auf Metallen und als eine der Komponenten in mehrphasigen Keramiken wie z.B. Al₂O₃/TiN oder Si₃N₄/TiN.

Reine TiN-Schichten bzw. TiN-Schichten mit Beimengungen von TiC werden heute über Gasphasenprozesse hergestellt. Hierzu zählen das CVD (chemical vapor deposition) und PVD (physical vapor deposition)-Verfahren. Entsprechende Anlagen sind kommerziell erhältlich und Bestandteil industrieller Fertigungsprozesse. Diese Schichten werden auf folgenden Gebieten eingesetzt:
- Verschleißschutz von Metallen bei abrasiven und tribologischen Anwendungen,
- auf Schneid-, Bohr- und Fräswerkzeugen zur Erhöhung der Zerspanungsleistung,
- als Korrosionsschutzschichten in chemischen Reaktoren,
- als Beschichtung von Uhrengehäusen und Schmuck.

Ein Nachteil der über CVD und PVD hergestellten TiN-Schichten besteht in der unzureichenden Haftung auf den Substraten, so daß die Schichten häufig abplatzen und damit beschichtete Werkzeuge vorzeitig unbrauchbar werden. Verwendbare Substrate sind Metalle mit hoher Wärmebeständigkeit, Hartmetalle, wie z.B. WC/Co, oder auch keramische Wendeschneidplatten.

Eine andere Anwendung von TiN betrifft den Einsatz in Mischkeramiken, wie z.B. Al₂O₃/TiN oder Si₃N₄/TiN. Durch die Zugabe von TiN zu den Matrixmaterialien können deren mechanische Eigenschaften, wie z.B. Härte, Zähigkeit oder Druckfestigkeit verbessert werden. Der TiN-Anteil in diesen Kompositen kann bis zu 20 Vol-% betragen. Eine Anwendung von TiN als Bulkmaterial ist derzeit nicht bekannt.

Reines TiN besitzt aufgrund seines hohen kovalenten Bindungscharakters nur eine sehr geringe Sinteraktivität. Eine Verdichtung erfordert daher normalerweise den Einsatz von Sinteradditiven. Im einfachsten Fall kann dies TiO₂ sein, das an Luft in Gegenwart von Wasser an der TiN-Oberfläche gebildet wird. So ist z.B. berichtet worden, daß TiN-Pulver mit einer mittleren Korngröße von 0,1 µm drucklos bei Temperaturen um 1.500°C bis zu relativen Dichten von 95% gesintert werden kann. Dieses Sinterverhalten wird der Aktivierung der zur Verdichtung führenden Diffusionsmechanismen über die Auflösung von an der TiN-Teilchenoberfläche lokalisiertem TiO₂ zugeschrieben.

Verschiedene Publikationen beschäftigen sich mit der Sinterung von TiN unter Druck und/oder in Gegenwart von Sinteradditiven. So führt das Heißpressen von TiN-Pulvern mit einem d₅₀-Wert von 1 µm bei Temperaturen bis zu 2.100°C und einem Preßdruck von 14 MPa nur zu einer Dichte von 93% der Theorie; siehe M. Morijama et al., "Mechanical and Electrical Properties of Hot-pressed TiN-Ceramics without Additives", J. Jap. Ceram. Soc., 99 (1991). Bei M. Morijama et al., "The Mechanical Properties of Hot-pressed TiN-Ceramics with Various Additives", J. Jap. Ceram. Soc., 101 (1993) wird das Verdichtungsverhalten von TiN in Gegenwart von Sinteradditiven beim Heißpressen beschrieben. Proben mit insgesamt 10 Gew.-% Al₂O₃, Y₂O₃ und B₄C ergeben nach dem Heißpressen bei 1.950 °C und 14 MPa Dichten um 97% der Theorie. Ferner ist über eine 95%-ige Verdichtung durch Heißpressen bei 1.800°C und 5,0 GPa berichtet worden.

Gemäß JP-A-1111774 (PAJ, Vol. 13, No. 331 (C-662) vom 25/07/89) wird ein nicht-oxidisches keramisches Pulver (z.B. Si₃N₄) mit einem hydrophilen Kupplungsmittel behandelt, um die Benetzbarkeit mit Wasser und organischem Material zu verbessern und die Dichte von daraus hergestellten Grünkörpern und dichtgesinterten keramischen Körpern zu erhöhen. Das hydrophile Kupplungsmittel weist die Struktur -(CH₂CH₂O)ₙ- und endständige hydrophile funktionelle Gruppen im Molekül auf.

Aufgabe der Erfindung ist es, ein Verfahren zur Herstellung von TiN-Sinterkörpern und -schichten bereitzustellen, das eine Kontrolle der Teilchenagglomeration und ausreichend hohe Feststoffgehalte der eingesetzten Teilchensuspensionen ermöglicht und bei niedrigeren Sintertemperaturen durchgeführt werden kann.

Erfindungsgemäß wird diese Aufgabe gelöst durch ein Verfahren zur Herstellung von TiN-Sinterkörpern oder -schichten, das dadurch gekennzeichnet ist, daß man nanokristallines TiN-Pulver mit einem durchschnittlichen Teilchengröße von nicht mehr als 100 nm in Anwesenheit mindestens einer niedrigmolekularen organischen Verbindung mit einem Molekulargewicht von nicht mehr als 1.000, die über mindestens eine funktionelle Gruppe verfügt, welche mit an der Oberfläche der Pulverteilchen vorhandenen Gruppen reagieren und/oder wechselwirken kann, in Wasser und/oder einem polaren organischen Lösungsmittel als Dispergiermedium dispergiert, das Dispergiermedium entfernt und das oberflächenmodifizierte TiN, das vor oder nach dem Entfernen des Dispergiermediums zu Grünkörpern oder Schichten verarbeitet worden ist, sintert.

Das erfindungsgemäße Verfahren ermöglicht es, die Agglomeration von nanoskaligen TiN-Pulvern zu kontrollieren, wodurch Dispersionen derartiger Teilchen mit hohen Feststoffgehalten in zufriedenstellender Weise hergestellt werden können.

Als Ausgangsmaterial für das erfindungsgemäße Verfahren wird nanokristallines TiN-Pulver mit einer Primärteilchengröße von unter 100 nm verwender. Dieses Pulver ist im Anlieferungszustand stark agglomeriert und weist Agglomerate in der Größe bis zu mehreren 10 µm auf. Ferner ist über das Pulver bekannt, daß es in der kristallinen Form des Osbornits vorliegt und an der Teilchenoberfläche eine dünne TiO₂-Schicht aufweist.
Um die Agglomerate des TiN-Ausgangsmaterials in dem Dispergiermedium auf ihre Primärteilchen zu deagglomerieren und eine stabile nanodisperse Suspension herzustellen, werden erfindungsgemäß Oberflächenmodifikatoren eingesetzt, d.h. oberflächenmodifizierende niedrigmolekulare organische (= kohlenstoffhaltige) Verbindungen, die über mindestens (und vorzugsweise) eine funktionelle Gruppe verfügen, die mit an der Oberfläche der TiN-Teilchen vorhandenen Gruppen reagieren und/oder (zumindest) wechselwirken kann. Hierzu eignen sich Verbindungen mit einem Molekulargewicht, das nicht höher als 1.000, vorzugsweise nicht höher als 500 und insbesondere nicht höher als 350 ist. Derartige Verbindungen sind vorzugsweise unter Normalbedingungen flüssig und in dem Dispergiermedium löslich oder zumindest emulgierbar.

Derartige Verbindungen weisen vorzugsweise nicht mehr als insgesamt 30, insbesondere nicht mehr als insgesamt 20 und besonders bevorzugt nicht mehr als 15 Kohlenstoffatome auf. Die funktionellen Gruppen, die diese Verbindungen tragen müssen, richten sich in erster Linie nach den Oberflächengruppen des jeweils eingesetzten TiN-Ausgangsmaterials und darüber hinaus auch nach der gewünschten Wechselwirkung. Besonders bevorzugt wird es, wenn zwischen den funktionellen Gruppen der oberflächenmodifizierenden Verbindung und den Oberflächengruppen der TiN-Partikel eine Säure/Base-Reaktion nach Bronsted oder Lewis stattfinden kann (einschließlich Komplexbildung und Adduktbildung). Ein Beispiel für eine andere geeignete Wechselwirkung ist die Dipol-Dipol-Wechselwirkung. Beispiele für bevorzugte funktionelle Gruppen sind somit Carbonsäuregruppen, (primäre, sekundäre und tertiäre) Aminogruppen und C-H-acide Gruppierungen. Es können auch mehrere dieser Gruppen gleichzeitig in einem Molekül vorhanden sein (Betaine, Aminosäuren, EDTA, usw.).

Demgemäß sind Beispiele für besonders bevorzugte Oberflächenmodifikatoren gesättigte oder ungesättigte Mono- und Polycarbonsäuren (vorzugsweise Monocarbonsäuren) mit 1 bis 12 Kohlenstoffatomen (z.B. Ameisensäure, Essigsäure, Propionsäure, Buttersäure, Pentansäure, Hexansäure, Acrylsäure, Methacrylsäure, Crotonsäure, Citronensäure, Adipinsäure, Bernsteinsäure, Glutarsäure, Oxalsäure, Maleinsäure und Fumarsäure). Bei den ungesättigten Carbonsäuren besteht zusätzlich die Möglichkeit, daß mit Hilfe der ethylenisch ungesättigten Doppelbindung eine Vernetzung durchgeführt werden kann.

Beispiele für weitere geeignete Oberflächenmodifikatoren sind Mono- und Polyamine, insbesondere solche der allgemeinen Formel R₃₋ₙNHₙ, worin n = 0, 1 oder 2 und die Reste R unabhängig voneinander Alkylgruppen mit 1 bis 12, insbesondere 1 bis 6 und besonders bevorzugt 1 bis 4 Kohlenstoffatomen darstellen (z.B. Methyl, Ethyl, n- und i-Propyl und Butyl) und Ethylenpolyamine (z.B. Ethylendiamin, Diethylentriamin etc.); β-Dicarbonylverbindungen mit 4 bis 12, insbesondere 5 bis 8 Kohlenstoffatomen, wie z.B. Acetylaceton, 2,4-Hexandion, 3,5-Heptandion, Acetessigsäure und Acetessigsäure-C₁-C₄-Alkylester; Organoalkoxysilane, wie z.B. diejenigen, die zur Oberflächenmodifizierung von kolloidaler Kieselsäure eingesetzt werden (z.B. solche der allgemeinen Formel R₄₋ₘSi(OR¹)ₘ worin die Gruppen R and R' unabhängig voneinander C₁-C₄-Alkyl darstellen und m 1, 2, 3 oder 4 ist); und modifizierte Alkoholate, bei denen ein Teil der OR-Gruppen (R wie oben definiert) durch inerte organische Gruppen substituiert ist und über die noch vorhandenen OR-Gruppen eine Anbindung (Kondensation) auf der Partikeloberfläche erfolgt und die organischen Gruppen die Abschirmung übernehmen. Beispiele hierfür sind z.B. Zirkon- und Titanalkoholate M(OR)₄ (M = Ti, Zr), bei denen ein Teil der OR-Gruppen durch einen Komplexbildner, wie z.B. eine β-Dicarbonylverbindung oder eine (Mono)carbonsäure ersetzt ist. Wird eine ethylenisch ungesättigte Verbindung (wie z.B. Methacrylsäure) als Komplexbildner eingesetzt, kann darüber hinaus auch eine Vernetzung stattfinden (siehe oben).

Besonders bevorzugte Oberflächenmodifikatoren sind Guanidincarbonat und Guanidinpropionsäure.

Als Dispergiermedium werden Wasser und/oder polare organische Lösungsmittel eingesetzt. Als polare organische Lösungsmittel eignen sich vorzugsweise solche, die mit Wasser mischbar sind. Spezielle Beispiele für verwendbare polare organische Lösungsmittel sind Alkohole, wie z.B. aliphatische Alkohole mit 1 bis 6 Kohlenstoffatomen (insbesondere Methanol, Ethanol, n- und i-Propanol und Butanol); Ketone, wie z.B. Aceton und Butanon; Ester, wie z.B. Essigsäureethylester; Ether, wie z.B. Diethylether, Tetrahydrofuran und Tetrahydropyran; Amide, wie z.B. Dimethylacetamid und Dimethylformamid; Sulfoxide und Sulfone, wie z.B. Sulfolan und Dimethylsulfoxid; und halogenierte aliphatische Kohlenwasserstoffe. Selbstverständlich können auch Mischungen dieser Lösungsmittel eingesetzt werden.

Das eingesetzte Dispergiermedium hat vorzugsweise einen Siedepunkt, der eine problemlose Entfernung desselben durch Destillation (gegebenenfalls unter reduziertem Druck) ermöglicht. Bevorzugt werden Lösungsmittel mit einem Siedepunkt unter 200°C, insbesondere unter 150°C.

Bei der Durchführung des erfindungsgemäßen Verfahrens beträgt der Gehalt an Dispergiermedium im allgemeinen 20 bis 90, vorzugsweise 30 bis 80 und insbesondere 35 bis 75 Gew.-%. Der Rest der Dispersion setzt sich zusammen aus Ausgangs-TiN-Pulver und niedrigmolekularer organischer Verbindung (Oberflächenmodifikator). Dabei beträgt das Gewichtsverhältnis TiN-Pulver/Oberflächenmodifikator im allgemeinen 1000:1 bis 4:1, insbesondere 500:1 bis 8:1 und besonders bevorzugt 250:1 bis 10:1.

Das erfindungsgemäße Verfahren wird vorzugsweise bei einer Temperatur von Raumtemperatur (ca. 20°C) bis zur Siedetemperatur des Dispergiermediums durchgeführt. Bevorzugt sind Dispergiertemperaturen im Bereich von 50 bis 100°C. In einer besonders bevorzugten Ausführungsform wird unter Rückfluß des Dispergiermediums gearbeitet.

Die Dispergierzeit hängt insbesondere von der Art der eingesetzten Materialien ab, beträgt aber im allgemeinen einige Minuten bis mehrere Stunden, z.B. 1 bis 24 Stunden.

Zur Verbesserung der Deagglomeration kann die Dispersion (Suspension) gegebenenfalls mit Ultraschall, Intensivmischern oder in der Keramik üblichen Mahlverfahren, z.B. Rührwerk-Kugelmühlen, behandelt werden.

Nach Beendigung der Oberflächenmodifizierung kann die erhaltene Dispersion (Suspension) entweder als solche weiterverarbeitet werden (d.h. zur Herstellung von Grünkörpern oder zum Beschichten von Substraten) oder das Dispergiermedium wird vor der Weiterverarbeitung ganz oder teilweise (z.B. bis zu einer gewünschten Feststoffkonzentration) entfernt. Ein besonders bevorzugtes Verfahren zur Entfernung des Dispergiermediums ist die Gefriertrocknung oder Gefriersprühtrocknung.

Nach dem Trocknen kann das oberflächenmodifizierte TiN-Pulver gegebenenfalls in einem anderen Dispergiermedium, das Wasser und/oder ein organisches Lösungsmittel umfaßt, redispergiert werden. Für eine vollständige Redispergierung hat es sich bewährt, das TiN zunächst mit Guanidinpropionsäure zu modifizieren und dann in Alkoholen oder auch reinem Wasser zu redispergieren.

Die nach dem erfindungsgemäßen Verfahren erhaltenen TiN-Suspensionen bzw. das trockene oberflächenmodifizierte nanokristalline TiN-Pulver haben eine Teilchengrößen-Verteilung unter 100 nm. Sie können zwecks Herstellung von Grünkörpern bzw. Sinterkörpern oder -schichten auf verschiedene Weise weiterverarbeitet werden. Beispielsweise kann man Extrusionsmassen herstellen, die nach der Extrusion zu fertigen Formkörpern gesintert werden können. Hierbei werden gewöhnlich pro 100 Gew.-Teile Extrusionsmasse 20 bis 80, insbesondere 30 bis 70 und besonders bevorzugt 40 bis 60 Gew.-Teile oberflächenmodifiziertes TiN-Pulver (entweder als solches oder in Form einer z.B. wie oben hergestellten Dispersion), 10 bis 70, insbesondere 20 bis 60 und besonders bevorzugt 30 bis 50 Gew.-Teile Dispergiermedium und 0,5 bis 20, insbesondere 2 bis 15, besonders bevorzugt 5 bis 10 Gew.-Teile Additive, die aus Bindemitteln, Plastifiziermitteln und Mischungen davon ausgewählt werden, eingesetzt.

Die erwähnten Bindemittel und Plastizifiermittel werden vorzugsweise aus modifizierten Cellulosen (z.B. Methylcellulose, Ethylcellulose, Propylcellulose und Carboxy-modifizierte Cellulose), Polyalkylenglykolen (insbesondere Polyethylenglykol und Polypropylenglykol, vorzugsweise mit einem durchschnittlichen Molekulargewicht von 400 bis 50.000), Dialkylphthalaten (z.B. Dimethylphthalat, Diethylphthalat, Dipropylphthalat und Dibutylphthalat) und Mischungen dieser Substanzen ausgewählt. Selbstverständlich können auch andere Binde- und Plastifiziermittel eingesetzt werden, wie z.B. Polyvinylalkohol etc.

Die obigen Bindemittel und Plastifiziermittel werden benötigt, um eine extrusionsfähige Masse und eine ausreichende Formstabilität nach der Formgebung zu gewährleisten.

Nach gründlicher Durchmischung der obigen Komponenten (z.B. in einer herkömmlichen Mischvorrichtung) kann ein Teil des Dispergiermediums (vorzugsweise unter reduziertem Druck) wieder entfernt werden, bis die Extrusionsmasse den gewünschten Feststoffgehalt aufweist. Bevorzugte Feststoffgehalte der Extrusionsmasse liegen bei mindestens 30 und insbesondere mindestens 40 Vol.-%.

Andere bevorzugte Formgebungsverfahren sind die Elektrophorese, der Schlickerguß, der Schlickerdruckguß und das Filterpressen sowie Kombinationen von Elektrophorese und Schlickerguß, Schlickerdruckguß oder Filterpressen; ferner das Spritzgießen, Faserspinnen, Gel-Casting und Zentrifugieren. In diesen Formgebungsverfahren werden kompakte Formkörper mit hohen Gründichten erhalten. Ebenso ist es möglich, die Suspensionen für Beschichtungszwecke einzusetzen. Geeignete Beschichtungsverfahren sind z.B. Tauchen, Spin-coating, Rakeln, Streichen und die Elektrophorese. Als Substrate kommen z.B. Metalle, Keramiken, Hartmetalle, Glas und Cermets in Frage.

Die hergestellten Grünkörper bzw. Schichten können dann getrocknet und einer Sinterbehandlung unterzogen werden. Dabei hat sich überraschenderweise gezeigt, daß die gewünschte Verdichtung bereits bei relativ niedrigen Temperaturen erfolgt. Ferner werden überraschenderweise keine Sinteradditive benötigt. Die Sintertemperatur liegt gewöhnlich im Bereich von 900 bis 1.500°C, vorzugsweise 1.100 bis 1.300°C. Dies ist deutlich niedriger als nach dem Stand der Technik, wo gewöhnlich Temperaturen bis 2.000°C, Sinteradditive and gegebenenfalls noch Druck benötigt werden.

Die erhaltenen TiN-Sinterkörper bzw. -schichten sind gekennzeichnet durch ein nanoskaliges Gefüge mit einer Korngröße unterhalb 100 nm, einer Dichte > 95% der Theorie und einer Härte von HV_{0,5} > 18 GPa.

Das erfindungsgemäß hergestellte TiN findet z.B. Anwendung als
- Bulk-Keramik z.B. für Schleifpulver.
- Beschichtungsmaterial für Metalle, Keramik und Glas für Dekorationszwecke, Verschleißschutz, tribologische Anwendungen, Korrosionsschutz, insbesondere als Schicht auf Schneidwerkzeugen und Schleifmitteln bzw. Schleifpulvern.
- Bestandteil in Keramik/Keramik-Kompositen. Als Matrixphase kommen z.B. Al₂O₃, TiC, SiC und Si₃N₄ in Frage.
- Bestandteil von Nanokompositen.
- Sinterhilfsmittel für gröberes TiN und andere Keramiken.
- Metall/Keramik-Komposite vom Typ Hartstoffe.
- Cermets.
- Mikroporöse Schichten für Filtrationszwecke, z.B. Mikro-Ultra-Nano-Filtration und Umkehrosmose.

Die folgenden Beispiele dienen der weiteren Erläuterung der vorliegenden Erfindung, ohne diese jedoch zu beschränken.

### BEISPIEL 1

### Oberflächenmodifizierung von nanoskaligem TiN

In 200 ml eines Gemisches aus Wasser und Ethanol (Volumenverhältnis 1:1) wird 1 g Guanidinpropionsäure gelöst. Zu der Lösung werden unter ständigem Rühren 10 g TiN-Pulver gegeben. Anschließend wird das Gemisch 5 h unter Rückfluß bei 100°C erhitzt. Nach Ablauf der Reaktionszeit wird die Suspension abgetrennt und der Filterrückstand mit Ethanol gewaschen. Das erhaltene feuchte Pulver wird 8 h bei 70°C getrocknet.

### BEISPIEL 2

### Redispergierung und Verschlickerung des TiN-Pulvers

60 g des oberflächenmodifizierten TiN-Pulvers aus Beispiel 1 werden unter ständigem Rühren und zwischenzeitlicher Ultraschallbehandlung zu 100 ml Wasser gegeben. Hierbei wird der pH der Suspension durch Zugabe von Tetrabutylammoniumhydroxid bei einem Wert von etwa 9 gehalten. Es resultiert ein stabiler Schlicker mit 37,5 Gew.-% Feststoffgehalt. Die Teilchengröße liegt im Bereich von 20 bis 50 nm.

### BEISPIEL 3

Das Verfahren von Beispiel 2 wird wiederholt, jedoch verwendet man Methanol anstelle von Wasser als Redispergiermedium.

### BEISPIEL 4

Das Verfahren von Beispiel 2 wird wiederholt, jedoch verwendet man Ethanol anstelle von Wasser als Redispergiermedium.

### BEISPIEL 5

### Grünkörper-Herstellung aus dem TiN-Schlicker (Schlickerguß)

50 ml des 37,5 Gew.-%igen TiN-Schlickers aus Beispiel 2 werden in eine runde PMMA-Form gegossen (Durchmesser: 40 mm, Höhe: 50 mm, Porenweite 1 µm). Nach einer Standzeit von 6 h entsteht ein Grünkörper mit den Abmessungen: Durchmesser 40 mm, Höhe 3 mm, Gründichte 40-50 % d.Th.

### BEISPIEL 6

Gemäß Beispiel 5 wird ein Grünkörper hergestellt, jedoch wird zusätzlich Druck angewandt (z.B. 5 bar), um die Gießzeit zu verkürzen.

### BEISPIEL 7

### Sintern des Grünkörpers

Gemäß Beispiel 5 hergestellte Grünkörper werden unter kontrollierter Feuchte und Temperatur in einem Klimaschrank getrocknet. Nach dem Trocknen werden sie in Argonatmosphäre bei Temperaturen zwischen 1.100 und 1.300°C gesintert. Die Aufheizrate beträgt bis T = 600°C 3 K/min, zwischen 600°C und der isothermen Haltetemperatur 20 K/min. Durch diese Sinterbehandlung erreichen die Proben relative Dichten über 95% d.Th. und weisen mittlere Korngrößen unterhalb von 100 nm auf.

### BEISPIEL 8

### Beschichtung von Al₂O₃-Substraten

Nach dem Verfahren von Beispiel 1 wird eine 20 Gew.-%ige wäßrige Suspension aus oberflächenmodifiziertem TiN-Pulver hergestellt. Eine dichtgesinterte Al₂O₃-Platte wird durch Eintauchen in die Suspension beschichtet. Die beschichtete Platte wird getrocknet und bei 1.300°C in einer Argonatmosphäre gesintert. Dabei wird eine feste TiN-Deckschicht mit einer Dicke von etwa 5 µm erhalten.

## Patentansprüche

1. Verfahren zur Herstellung von TiN-Sinterkörpern oder -schichten, dadurch gekennzeichnet, daß man nanokristallines TiN-Pulver mit einer durchschnittlichen Teilchengröße von nicht mehr als 100 nm in Anwesenheit mindestens einer niedrigmolekularen organischen Verbindung mit einem Molekulargewicht von nicht mehr als 1.000, die über mindestens eine funktionelle Gruppe verfügt, welche mit an der Oberfläche der Pulverteilchen vorhandenen Gruppen reagieren und/oder wechselwirken kann, in Wasser und/oder einem polaren organischen Lösungsmittel als Dispergiermedium dispergiert, das Dispergiermedium entfernt und das oberflächenmodifizierte TiN, das vor oder nach dem Entfernen des Dispergiermediums zu Grünkörpern oder Schichten verarbeitet worden ist, sintert.

2. Verfahren nach Anspruch 1, dadurch gekennzeichnet, daß man das oberflächenmodifizierte TiN bei einer Temperatur bis zu 1.300°C sintert.

3. Verfahren nach einem der Ansprüche 1 und 2, dadurch gekennzeichnet, daß die niedrigmolekulare organische Verbindung ein Molekulargewicht von nicht mehr als 500 aufweist.

4. Verfahren nach irgendeinem der Ansprüche 1 bis 3, dadurch gekennzeichnet, daß die niedrigmolekulare organische Verbindung aus aliphatischen, gesättigten oder ungesättigten C₁-C₁₂ Monocarbonsäuren, Polycarbonsäuren, Aminen der Formel R₃₋ₙNHₙ, worin n = 0, 1 oder 2 und die Reste R unabhängig voneinander Alkylgruppen mit 1 bis 12, insbesondere 1 bis 6, Kohlenstoffatomen darstellen, β-Dicarbonylverbindungen mit 4 bis 12, insbesondere 5 bis 8 Kohlenstoffatomen, Titansäureestern, modifizierten Alkoholaten und Organoalkoxysilanen ausgewählt wird.

5. Verfahren nach irgendeinem der Ansprüche 1 bis 4, dadurch gekennzeichnet, daß das Dispergiermedium ein Gemisch aus Wasser und einem polaren organischen Lösungsmittel umfaßt.

6. Verfahren nach irgendeinem der Ansprüche 1 bis 5, dadurch gekennzeichnet, daß 20 bis 90, und insbesondere 30 bis 80 Gew.-% Dispergiermedium, bezogen auf das Gesamtgewicht von Dispergiermedium, TiN-Pulver und niedrigmolekularer organischer Verbindung, eingesetzt werden.

7. Verfahren nach irgendeinem der Ansprüche 1 bis 6, dadurch gekennzeichnet, daß das Gewichtsverhältnis TiN-Pulver/niedrigmolare organische Verbindung 1000:1 bis 4:1, insbesondere 500:1 bis 8:1 beträgt.

8. Verfahren nach irgendeinem der Ansprüche 1 bis 7, dadurch gekennzeichnet, daß die Dispergierung bei einer Temperatur von 20°C bis zur Siedetemperatur des Dispergiermediums, vorzugsweise unter Rückfluß des Dispergiermediums, durchgeführt wird.

9. Verfahren nach irgendeinem der Ansprüche 1 bis 8, dadurch gekennzeichnet, daß das Dispergiermedium durch Gefriertrocknen oder Gefriersprühtrocknen entfernt wird.

10. Verfahren nach irgendeinem der Ansprüche 1 bis 9, dadurch gekennzeichnet, daß man das oberflächenmodifizierte TiN-Pulver nach dem Abtrennen des Dispergiermediums in einem anderen Medium redispergiert.

## Claims

1. Process for producing TiN sintered bodies or coatings, characterized in that nanocrystalline TiN powder having an average particle size of not more than 100 nm is dispersed in water and/or a polar organic solvent as dispersion medium in the presence of at least one low molecular weight organic compound having a molecular weight of not more than 1000 and having at least one functional group capable of reacting and/or interacting with groups present on the surfaces of the powder particles, said dispersion medium is removed and the surface-modified TiN which prior to or following the removal of the disperson medium has been processed into green bodies or coatings is sintered.

2. Process according to claim 1, characterized in that said surface-modified TiN is sintered at a temperature of up to 1300°C.

3. Process according to any one of claims 1 and 2, characterized in that said low molecular weight organic compound has a molecular weight of not more than 500.

4. Process according to any one of claims 1 to 3, characterized in that said low molecular weight organic compound is selected from aliphatic, saturated or unsaturated C₁-C₁₂ monocarboxylic acids, polycarboxylic acids, amines of the formula R₃₋ₙNHₙ, wherein n = 0, 1 or 2 and the radicals R independently represent alkyl groups having from 1 to 12, particularly from 1 to 6 carbon atoms, β-dicarbonyl compounds having from 4 to 12, particularly from 5 to 8 carbon atoms, organotitanates, modified alcoholates and organoalkoxysilanes.

5. Proces according to any one of claims 1 to 4, characterized in that said dispersion medium comprises a mixture of water and a polar organic solvent.

6. Process according to any one of claims 1 to 5, characterized in that 20 to 90% by wt., and particularly from 30 to 80% by wt. of the dispersion medium, based on the total weight of dispersion medium, TiN powder and low molecular weight organic compound, are employed.

7. Process according to any one of claims 1 to 6, characterized in that the weight ratio TiN powder/low molecular weight organic compound ranges from 1000:1 to 4:1, particularly from 500:1 to 8:1.

8. Process according to any one of claims 1 to 7, characterized in that said dispersion operation is carried out at a temperature of from 20°C to the boiling temperature of the dispersion medium, preferably under reflux of the dispersion medium.

9. Process according to any one of claims 1 to 8, characterized in that said dispersion medium is removed by freeze-drying or freeze-spraydrying.

10. Process according to any one of claims 1 to 9, characterized in that following the removal of the dispersion medium said surface-modified TiN powder is redispersed in a different medium.

## Revendications

1. Procédé de fabrication de corps ou de couches frittés à base de TiN, caractérisé en ce qu'on disperse une poudre nanocristalline de TiN, ayant une dimension moyenne de particules ne dépassant pas 100 nm, dans de l'eau et/ou dans un solvant organique polaire comme milieu dispersif, en présence d'au moins un composé organique de faible poids moléculaire, ayant un poids moléculaire ne dépassant pas 1 000, qui dispose d'au moins un groupe fonctionnel qui peut réagir et/ou agir mutuellement avec des groupes présents à la surface des particules de poudre, on élimine le milieu dispersif et on fritte le TiN modifié en surface, qu'on a transformé en corps crus ou en couches avant ou après l'élimination du milieu dispersif.

2. Procédé selon la revendication 1, caractérisé en ce qu'on fritte le TiN modifié en surface à une température allant jusqu'à 1 300°C.

3. Procédé selon l'une des revendications 1 et 2, caractérisé en ce que le composé organique de faible poids moléculaire a un poids moléculaire ne dépassant pas 500.

4. Procédé selon l'une quelconque des revendications 1 à 3, caractérisé en ce que le composé organique de faible poids moléculaire est choisi parmi des acides monocarboxyliques en C₁-C₁₂, aliphatiques, saturés ou insaturés, des acides polycarboxyliques, des amines répondant à la formule R₃₋ₙNHₙ, où n = 0, 1 ou 2, et les restes R représentent indépendamment les uns des autres des groupes alkyles ayant de 1 à 12, en particulier de 1 à 6, atomes de carbone, des composés β-dicarbonyles ayant de 4 à 12, en particulier de 5 à 8, atomes de carbone, des esters titanates, des alcoolates modifiés et des organoalcoxysilanes.

5. Procédé selon l'une quelconque des revendications 1 à 4, caractérisé en ce que le milieu dispersif comprend un mélange formé d'eau et d'un solvant organique polaire.

6. Procédé selon l'une quelconque des revendications 1 à 5, caractérisé en ce qu'on utilise de 20 à 90, et en particulier de 30 à 80 % en poids de milieu dispersif par rapport au poids total du milieu dispersif, de la poudre de TiN et du composé organique de faible poids moléculaire.

7. Procédé selon l'une quelconque des revendications 1 à 6, caractérisé en ce que le rapport en poids de la poudre de TiN au composé organique de faible poids moléculaire est de 1000:1 à 4:1, en particulier de 500:1 à 8:1.

8. Procédé selon l'une quelconque des revendications 1 à 7, caractérisé en ce qu'on effectue la dispersion à une température comprise entre 20°C et le point d'ébullition du milieu dispersif, de préférence avec un chauffage au reflux du milieu dispersif.

9. Procédé selon l'une quelconque des revendications 1 à 8, caractérisé en ce qu'on élimine le milieu dispersif par lyophilisation ou par séchage par pulvérisation et congélation.

10. Procédé selon l'une quelconque des revendications 1 à 9, caractérisé en ce qu'après l'élimination du milieu dispersif, on disperse de nouveau la poudre de TiN modifiée en surface dans un autre milieu.
